# EUROPÄISCHE PATENTSCHRIFT

(11) **EP 1 886 375 B1**
(45) Veröffentlichungstag und Bekanntmachung des Hinweises auf die Patenterteilung: **11.01.2012**
(21) Anmeldenummer: 06705986.5
(22) Anmeldetag: 17.02.2006
(51) Int. Cl.: H01M 10/44, H01M 10/50, H01M 10/26

(54) **ENERGIEKONVERTERZELLE ZUR DIREKTEN UMWANDLUNG VON WÄRMEENERGIE IN ELEKTRISCHE ENERGIE**
ENERGY CONVERTER CELL FOR THE DIRECT CONVERSION OF THERMAL ENERGY INTO ELECTRICAL ENERGY
CELLULE DE CONVERSION D'ENERGIE DESTINEE A LA CONVERSION DIRECTE D'ENERGIE THERMIQUE EN ENERGIE ELECTRIQUE

(30) Priorität: 30.05.2005 DE 102005025028
(43) Veröffentlichungstag der Anmeldung: 13.02.2008
(73) Patentinhaber: Henze, Werner, D-30916 Isernhagen (DE)
(72) Erfinder: Henze, Werner, D-30916 Isernhagen (DE)
(74) Vertreter: Körner, Peter
(86) Internationale Anmeldenummer: PCT/DE2006/000301
(87) Internationale Veröffentlichungsnummer: WO 2006/128406

(56) Entgegenhaltungen:
- WO-A-2004/015794
- DE-C- 205 089
- GB-A- 1 482 621
- US-A- 3 026 364

## Beschreibung

Beim Entladen galvanischer Elemente - Primärbatterien oder Akkumulatoren - mit wässerigen Elektrolyten geht normalerweise das Metall, aus dem die negative Elektrode besteht, in Lösung und am Pluspol entsteht durch die Entladung von positiv geladenen Ionen direkt oder über eine Reaktion atomarer Wasserstoff. Dieser Wasserstoff bildet sehr schnell Wasserstoffmoleküle (H₂), wenn er zuvor mit keinem anderen Stoff reagiert. Durch diesen Effekt erhöht sich rasch der Innenwiderstand der Zelle, weil das am Pluspol gebildete Wasserstoffgas isolierend wirkt. Es gibt Verfahren und Methoden den Wasserstoff zu Wasser zu reduzieren, z. B. können an der positiven Elektrode folgende mögliche Reaktionen ablaufen:

| | |
|---|---|
| Pb⁴⁺O₂ + 2 H⁺ + 2 e → Pb²⁺O + H₂O | beim Bleiakkumulator |
| 2 Ni³⁺O(OH) + 2 H⁺ + 2 e → 2 Ni²⁺O + 2 H₂O | beim Nickel-Eisen-Akkumulator |
| 2 Mn⁴⁺O₂ + 2 H⁺ + 2e → Mn₂³⁺O₃ + H₂O | bei der Alkali-Mangan-Batterie |

Am Pluspol entsteht also immer ein Endprodukt, das im Fall der Akkumulatoren nur elektrisch rückgewandelt werden kann. Analog dazu verhält sich auch die negative Elektrode. Dort entstehen beim Entladevorgang folgende Substanzen:

| | |
|---|---|
| Pb + [ SO₄ ]²⁻ - 2e → PbSO₄ | beim Bleiakkumulator |
| Fe + 2 (OH)⁻ - 2 e → Fe(OH)₂ | beim Nickel-Eisen-Akkumulator |
| Zn + 2 Cl⁻ - 2 e → ZnCl₂ | bei der Alkali-Mangan-Batterie |

DE 205 089 offenbart eine Energiekonverterzelle, bestehend aus einer negativen Elektrode aus Zinn, einer positiven Elektrode aus Graphit und einem zwischen den Elektroden angeordneten und mit diesen in Kontakt stehenden Elektrolyten, die unter Abgabe elektrischer Energie an einen an die Elektroden angeschlossenen ohmschen Verbraucherwiderstand entladbar und durch Zuführung thermischer Energie wirksam ist.

Aufgabe der Erfindung ist es, mit Hilfe von Wärmeenergiezufuhr keine Endprodukte entstehen zu lassen. Dazu muss der am Pluspol gebildete atomare Wasserstoff mit dem Elektrolyten reagieren, woraus eine lösbare Substanz entsteht, mit der das am Minuspol gebildete Salz reagieren kann. Diese Reaktion, die nur unter Wärmeenergiezufuhr abläuft, muss wieder die erforderlichen Ausgangsprodukte liefern. Wichtig ist, dass der gebildete Wasserstoff in atomarer oder ionischer Form zur Reduktion des Zinns an der richtigen Stelle zur Verfügung steht.

Es gibt Salze einer nicht existierenden "Manganigen" Säure H₂MnO₃. Dazu gehört das Salz, das aus Braunstein und Kaliumhydroxid entsteht.

MnO₂ + 2 KOH → K₂ [Mn_{O3}] + H₂O

Der Elektrolyt besteht aus Wasser, in dem das Salz K₂[MnO₃] und Kaliumhydroxid gelöst ist. Nach Inbetriebnahme der Zelle ist zum Teil auch ein Stannat(II)-Salz K[Sn(OH)₃] gelöst. Nachfolgend wird zwischen den elektrochemischen Reaktionen und den chemischen Rückführungsreaktionen, die die Regenerierung der Ausgangsstoffe ermöglichen, unterschieden. Die positive Elektrode besteht aus einer Graphitfolie und die negative aus Zinn. Die beiden Ausgangsprodukte K₂[MnO₃] und Zinn müssen bei elektrischer Belastung der Zellen aus den elektrochemisch entstandenen Produkten wieder regeneriert werden, um einen Kreislauf zu gewährleisten. Bei Stromfluss über einen externen Verbraucherwiderstand laufen nachfolgende Reaktionen ab:

### 1. Elektrochemische Reaktion am Pluspol ( Reduktion ):

2 K⁺ + 2e → 2K

2 K + 2H₂O → 2 KOH + 2 H

Nach Entladung der K⁺-lonen können die K-Atome mit Wasser reagieren oder auch in das Kristallgitter der Graphitelektrode eingelagert werden. Außer diesem Effekt kann Graphit auch den entstandenen atomaren Wasserstoff in sein Kristallgitter aufnehmen, so dass dieser zur Reaktion mit dem Elektrolyten in seiner aktiven Form zur Verfügung steht. Vorzugsweise ist die Graphitelektrode derart porös, dass die Oberfläche der Graphitelektrode möglicht groß ist. Vorzugsweise besteht die Graphitelektrode daher aus einem zusammengepressten Graphitpulver. Wasserstoff selbst ist in Wasser praktisch unlöslich. Eine Reaktion des Wasserstoffs mit Luftsauerstoff ist kaum möglich, weil die Graphitelektrode porös ist und Elektrolytflüssigkeit enthält.

### 2. Rückführungsreaktion am Pluspol (Reduktion):

K₂[MnO₃] + H₂O + 2 H → K₂[Mn(OH)₄]

Dabei reduziert sich die Wertigkeitsstufe des Mangans von +4 auf +2.

### 3. Elektrochemische Reaktion am Minuspol (Oxidation):

[MnO₃]²- - 2e + 2 KOH + Sn → Sn(OH)₂ + K₂[MnO₃]

Es entsteht Zinnhydroxid und bereits wieder ein Ausgangsprodukt, nämlich das Salz K₂[MnO₃].

### 4. Rückführungsreaktionen am Minuspol (Reduktion):

Sn(OH)₂ + KOH → K[Sn(OH)₃]

Das am Pluspol entstandene Hydroxomanganat(II) K₂[Mn(OH)₄] reagiert mit dem Stannat(II) K[Sn(OH)₃] unter Zufuhr von Wärmeenergie:

K₂[Mn(OH)₄] + K[Sn(OH)₃] → K₂[MnP₃] + KOH + 3 H₂O + Sn

Erst mit dieser Reaktion wird Wasser rückgebildet und Zinn wieder in seinen elementaren Zustand versetzt. Außerdem steht das am Pluspol zur Aufnahme von Wasserstoff benötigte Salz K₂[MnO₃] wieder zur Verfügung und das Mangan gelangt von der 2-wertigen wieder in die 4-wertige Stufe. Durch diese Reaktion wird somit der Kreislauf des Wasserstoffs und des Zinns geschlossen.

Aus der nachstehend vereinfachten Reaktionsgleichung ist zu erkennen, dass zur elektrischen Energiegewinnung die linke Seite der Gleichung zur rechten führt und der umgekehrte Weg mit Energiezufuhr möglich ist.

Sn + 2 H₂O ⇄ Sn(OH)₂ + 2 H + 16,7 kJ

Zu beachten ist noch, dass 2-wertiges Zinn bei Erwärmung leicht in die 4-wertige Stufe übergeht.

2 K[Sn(OH)₃] → K₂[Sn(OH)₆] + Sn

Jedoch wird mit dem Hydroxomanganat(II) K₂[Mn(OH)₄] das Zinn in der Verbindung K₂[Sn(OH)₆] in seinen elementaren Zustand versetzt.

K₂[Sn(OH)₆] + 2 K₂[Mn(OH)₄] → 2 K_{2[}MnO₃] + 2 KOH + 6 H₂O + Sn

Das Stannat(II) K[Sn(OH)₃] kommt auch im wasserfreien Zustand vor, d.h. es lässt sich entwässern.

2 K[Sn(OH)₃] → K₂Sn₂O₃ + 3 H₂O

Auch die Verbindung K₂Sn₂O₃ kann zum Zinn reduziert werden:

2 K₂[Mn(OH)₄] + K₂Sn₂O₃ → 2 K₂[MnO₃] + 2 KOH + 3 H₂O + 2 Sn

Die molare freie Standardenthalpie für Sn(OH)₂ beträgt ΔG = - 491,1 kJ/mol. Demnach müsste die Leerlaufspannung der Zelle 1,33 V betragen. Maximal wurden 1,26 V bei ca. 25° C gemessen. Die Wärmeenergieumwandlung in elektrische Energie funktioniert bereits bei Raumtemperatur (20° C). Sie steigt mit Temperaturerhöhung exponentiell an.

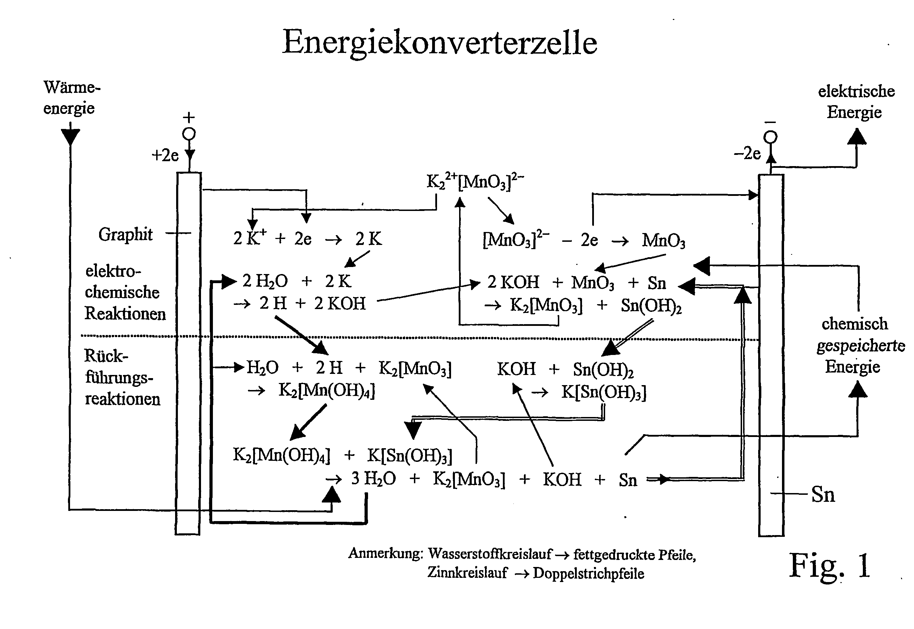

In Fig. 1 sind die Funktionsabläufe der Energiekonverterzelle dargestellt. Die Pfeile zwischen den Reaktionsgleichungen, die fett gedruckt sind, weisen auf den Transport des Wasserstoffs hin, der sich in einem Kreislauf befindet und die Doppelstrichpfeile deuten analog dazu auf den Kreislauf des Zinns hin. Außerdem ist eine gestrichelte Trennungslinie vorhanden, die zwischen den elektrochemischen Reaktionen und den Rückführungsreaktionen verläuft, in denen die Depolarisation der positiven Elektrode erfolgt und die Regenerierung der Ausgangssubstanzen bewirkt wird. Weiterhin ist dargestellt, wie Wärmeenergie zur Reduktion chemischer Substanzen dient, die dann wieder zur elektrischen Energieerzeugung zur Verfügung stehen.

### Wiedereinsatz des regenerierten elementaren Zinns

Das regenerierte Zinn, das aus der Reaktion des Hydroxomanganats(II) K₂[Mn (OH)₄] und des Stannats(II) K[Sn(OH)₃] entstanden ist, hat keinen elektrischen Kontakt zur negativen Zinnelektrode. Außerdem reagiert es in der vorliegend fein verteilten Form und bei erhöhter Temperatur bereits mit Wasser.

Sn + H₂O → SnO + 2 H + 19,1 kJ

Es entsteht Wasserstoff und durch die nachstehende Reaktion Zinnhydroxid

SnO + H₂O → Sn(OH)₂

Mit Kaliumhydroxid bildet sich wieder das Stannat(II)

Sn(OH)₂ + KOH → K[Sn(OH)₃]

Das Salz K[Sn(OH)₃] wird vom Elektrolyten aufgenommen und der Wasserstoff gelangt zu Magnetitpartikeln (Fe₃O₄), die elektrischen Kontakt mit der negativen Elektrode haben.

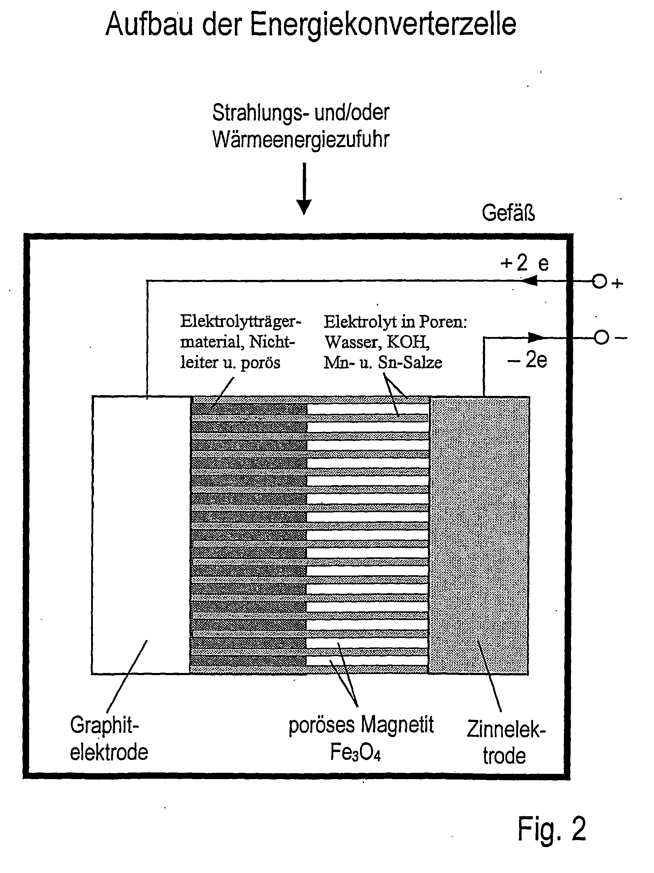

In Fig. 2 ist der innere Aufbau der Zelle im Schnitt dargestellt. An die positive Elektrode grenzt eine dünne Schicht, die aus einem porösen, nicht elektrisch leitenden und wasseraufnahmefähigen Trägermaterial besteht, in der sich Elektrolytflüssigkeit befindet. Das Material kann z.B. aus Baumwollfasern bestehen. Auch in der Zink-Luft-Primärbatterie werden diese zur Aufnahme von 40%iger Kalilauge verwandt.

Zwischen der elektrolythaltigen, nur ionisch leitenden Schicht und der aus Zinn bestehenden negativen Elektrode befindet sich eine poröse Eisenoxidschicht (Fe₃O₄), die ebenfalls Elektrolytflüssigkeit enthält. Das Eisen(II, III)-oxid ist gegenüber alkalischen Substanzen resistent, elektrisch leitend und hat die Eigenschaft Wasserstoff in sein Kristallgitter atomar aufzunehmen. Erst bei weit über der Betriebstemperatur der Energiekonverterzelle liegenden Temperatur, nämlich ca. 500° C, reagiert Wasserstoff mit Fe₃O₄:

Fe₃O₄ + 4H₂ ⇄ 3 Fe + 4 H₂O

Der vom Eisenoxid Fe₃OP₄ aufgenommene Wasserstoff verteilt sich gleichmäßig im Kristallgitter des Oxids und gelangt bis zur Innenseite der negativen Zinnelektrode. Er reagiert dort und auch an der Oberfläche des Eisenoxids elektrochemisch mit negativ geladenen Ionen, indem er Elektronen zur negativen Elektrode abgibt. Weil die Elektrolytflüssigkeit auch thermischen Strömungen unterliegt, gelangt der gesamte im Elektrolyten entstandene Wasserstoff zur Oberfläche des Eisenoxids und der Innenseite der negativen Elektrode. Mit der Verwendung des Eisenoxids Fe₃O₄ wird praktisch die Oberfläche der negativen Elektrode extrem vergrößert und es wird das regenerierte Zinn bzw. der daraus entstandene Wasserstoff abhängig von der thermischen Bewegung der Elektrolytflüssigkeit erfassbar gemacht. Die negative Elektrode ist deshalb teils eine Zinn- und teils eine Wasserstoffelektrode.

Es hat sich gezeigt, dass der Wirkungsgrad der Energiekonverterzelle auch noch dadurch erhöht werden kann, dass zwischen der elektrolythaltigen, nur ionisch leitenden Schicht und der aus Zinn bestehenden negativen Elektrode eine poröse Mischung aus Eisenoxid (Fe₃O₄) und Zinn (Sn), insbesondere in Form einer Pulvermischung, angeordnet ist, welche ebenfalls Elektrolytflüssigkeit enthält. Durch das Zinn (Sn) wird einerseits die Leitfähigkeit und andererseits auch die für die Ab- und Adsorptionsvorgänge erforderliche Oberfläche der genannten Schicht erhöht.

Die genannte Mischung kann anstelle von Zinn auch mit anderen gleichwirkenden endothermen Metallen ausgeführt werden, insbesondere mit Zink oder Chrom.

### Gleichgewichtsbedingung zwischen elektrischer Last und Wärmeenergiezufuhr

Wenn die elektrische Belastung im Verhältnis zur Energieumwandlungskapazität und zur Betriebstemperatur der Energiekonverterzelle zu hoch ist, kann der Elektrolyt den gesamten an der positiven Elektrode gebildeten Wasserstoff nicht aufnehmen. Es entstehen dort Wasserstoffmoleküle (H₂), wodurch der Innenwiderstand der Zelle steigt. Außerdem sinkt der Wasseranteil des Elektrolyten und es bildet sich mehr Stannat(II)-Salz, womit auch in Wasser gelöstes Kaliumhydroxid gebunden wird.

Wenn die Betriebstemperatur höher ist, als es die elektrische Last erfordert, erhöht sich auch die Klemmenspannung der Zelle. Ein Leerlauf ist in der Regel unschädlich und begünstigt die Reduktion der unter vorheriger elektrischer Belastung entstandenen Produkte, jedoch kann bei einer zu hohen Betriebstemperatur an der negativen Elektrode Wasserstoff entwickelt werden,

Sn + 4 H₂O + 2KOH → K₂[Sn(OH)₆] + 2 H₂

womit ebenfalls Wasserstoffmoleküle entstehen und Wasser verbraucht wird. Es ist also sinnvoll, die Wärmeenergiezufuhr an die elektrische Last anzupassen oder umgekehrt, was mit Regelschaltungen leicht erreichbar ist.

Vorteilhaft ist weiterhin, dass die Zelle keine besonders umweltschädlichen Stoffe enthält. Kalilauge wird z.B. auch in Alkali-Mangan-Zellen verwandt.

Das Verfahren kann auch unter Verwendung anderer Metalle realisiert werden. In Betracht kommen z.B. Zink, Chrom, Eisen, Cadmium, Blei und Kupfer.

### Elektrische Energiespeicherung mit der Energiekonverterzelle

Solange die Zelle Zinnsalz enthält kann zugeführte elektrische Energie in der Zelle gespeichert werden. Am Minuspol wird dann Wasserstoff erzeugt, der vorhandene Zinnsalze zu elementaren Zinn reduziert.

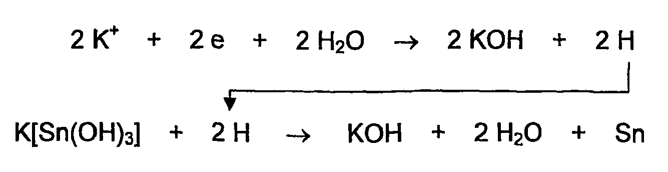

Am Pluspol wird zunächst Sauerstoff erzeugt, mit dem dann die Wertigkeitsstufe des Mangans von +4 auf +6 erhöht wird.

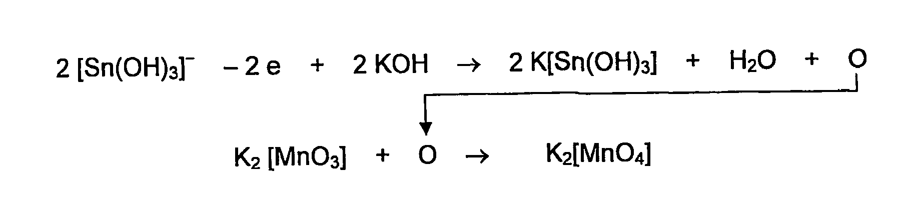

Bei der folgenden Reaktion wird die Wertigkeitsstufe des Mangans von +6 wieder auf +4 reduziert:

K₂[MnO₄] + K₂[Mn(OH)₄] → 2 K₂[MnO₃] + 2 H2O

Auf diese Weise ist also auch elektrische Energie in der Zelle begrenzt speicherbar.

## Patentansprüche

1. Energiekonverterzelle, bestehend aus einer negativen Elektrode aus einem Metall, das ausgewählt ist aus der Gruppe, die aus Zinn, Zink, Chrom, Eisen, Cadmium, Blei und Kupfer (M) besteht, einer positiven Elektrode aus Graphit und einem zwischen den Elektroden angeordneten und mit diesen in Kontakt stehenden Elektrolyten, der im geladenen Zustand in Wasser gelöstes Manganat(IV)-Salz und Alkalimetall(A)-Hydroxid umfasst und ein galvanisches Element bildet, das unter Abgabe elektrischer Energie an einen an die Elektroden angeschlossenen ohmschen Verbraucherwiderstand entladbar und durch Zuführung thermischer Energie aufladbar ist, wobei die Entladung und Ladung durch nachfolgende Reaktionen beschrieben sind:
Entladung:
a) elektrochemische Reaktion an der positiven Elektrode:
2A⁺ + 2e → 2A
2 A + 2 H₂O → 2 AOH + 2 H
b) elektrochemische Reaktion an der negativen Elektrode:
[MnO₃]²⁻ - 2e + 2 AOH + M → M(OH)₂ + A₂[MnO₃]
Ladung:
c) Rückführungsreaktion an der positiven Elektrode:
A₂[MnO₃] + H₂O + 2H → A₂[Mn(OH)₄]
d) Rückführungsreaktion an der negativen Elektrode:
M(OH)₂ + AOH → A[M(OH)₃]
A₂[Mn(OH)₄] + A[M(OH)₃] + Wärme → A₂[MnO₃] + AOH + 3 H₂O + M
wobei A ein Alkalimetall ist und M ein Metall ist, das aus der Gruppe ausgewählt ist, die aus Zinn, Zink, Chrom, Eisen, Cadmium, Blei und Kupfer besteht.

2. Energiekonverterzelle nach Anspruch 1, **dadurch gekennzeichnet, dass** das galvanische Element alternativ oder zusätzlich unter Aufnahme elektrischer Energie aus einer an die Elektroden angeschlossenen Energiequelle aufladbar ist, wobei die Ladung durch nachfolgende Reaktionen beschrieben sind:
Ladung:
a) elektrochemische Reaktion an der positiven Elektrode:
2 [M(OH)₃]⁻ - 2 e + 2 AOH + A₂[Mn(OH)₄] → 2 A[M(OH)₃] + A₂[MnO₃] + 3 H2O
b) elektrochemische Reaktion an der negativen Elektrode:
2 A⁺ + 2 e + A[M(OH)₃] → 3 AOH + M

3. Energiekonverterzelle nach Anspruch 1 oder 2, **dadurch gekennzeichnet, dass** das Alkalimetall (A) Kalium ist.

4. Energiekonverterzelle nach einem der Ansprüche 1 bis 3, **dadurch gekennzeichnet, dass** das Metall (M) Zinn ist.

5. Energiekonverterzelle nach einem der Ansprüche 1 bis 4, **dadurch gekennzeichnet, dass** an der positiven Elektrode das Manganat(IV)-Salz depolarisierend wirkt.

6. Energiekonverterzelle nach einem der Ansprüche 1 bis 5, **dadurch gekennzeichnet, dass** die positive Elektrode eine Graphitfolie ist und/oder derart porös ist, dass sie eine möglichst große Oberfläche aufweist.

7. Energiekonverterzelle nach einem der Ansprüche 1 bis 6, **dadurch gekennzeichnet, dass** an der zum Elektrolyt weisenden Seite der positiven Elektrode eine Schicht aus einem porösen, elektrisch nicht leitenden und zur Aufnahme des Elektrolyten geeigneten Trägermaterial angeordnet ist, und wobei zwischen dieser Schicht und der negativen Elektrode eine poröse Eisenoxidschicht (Fe₃O₄) ausgebildet ist, die ebenfalls Elektrolyt enthält und im elektrischen Kontakt mit negativen Elektrode steht.

8. Energiekonverterzelle nach Anspruch 7, **dadurch gekennzeichnet, dass** zwischen der Schicht aus Trägermaterial und der negativen Elektrode anstelle der porösen Eisenoxidschicht (Fe₃O₄) eine poröse und elektrisch leitende Mischung aus Eisenoxid (Fe₃O₄) und Zinn (Sn) besteht, die ebenfalls Elektrolyt enthält.

9. Energiekonverterzelle nach Anspruch 8, **dadurch gekennzeichnet, dass** die Mischung anstelle von oder zusätzlich zum Zinn (Sn) wenigstens ein anderes gleich wirkendes Metall, insbesondere Zink (Zn) oder Chrom (Cr), umfasst.

10. Energiekonverterzelle nach einem der Ansprüche 7 bis 9, **dadurch gekennzeichnet, dass** das Trägermaterial aus Baumwollfasern oder dergleichen besteht und/oder die Schicht aus Trägermaterial dünn ausgebildet ist.

11. Energiekonverterzelle nach einem der Ansprüche 1 bis 10, **dadurch gekennzeichnet, dass** die Energiekonverterzelle Mittel, insbesondere eine Regelschaltung, aufweist, um die Wärmeenergiezufuhr an die elektrische Last oder die elektrische Last an die Wärmeenergiezufuhr anzupassen.

12. Verfahren zur Umwandlung chemischer Energie in elektrische Energie und thermischer Energie in chemische Energie mit einer Energiekonverterzelle, bestehend aus einer negativen Elektrode aus einem Metall, das ausgewählt ist aus der Gruppe, die aus Zinn, Zink, Chrom, Eisen, Cadmium, Blei und Kupfer (M) besteht, einer positiven Elektrode aus Graphit und einem zwischen den Elektroden angeordneten und mit diesen in Kontakt stehenden Elektrolyten, der im geladenen Zustand in Wasser gelöstes Manganat(IV)-Salz und Alkalimetall(A)-Hydroxid umfasst und ein galvanisches Element bildet, indem
zur Umwandlung chemischer Energie in elektrische Energie
a) an der positiven Elektrode:
2 A⁺ + 2 e → 2 A
2 A + 2 H₂O → 2 AOH + 2 H und
b) an der negativen Elektrode:
[MnO₃]²⁻ - 2 e + 2 AOH + M → M(OH)₂ + A₂[MnO₃]
umgesetzt werden und
zur Umwandlung thermischer Energie in chemische Energie
c) an der positiven Elektrode:
A₂[MnO₃] + H₂O + 2 H → A₂[Mn(OH)₄] und
d) an der negativen Elektrode:
M(OH)₂ + AOH → A[M(OH)₃]
A₂[Mn(OH)₄] + A[M(OH)₃] + Wärme → A₂[MnO₃] + AOH + 3 H₂O + M
umgesetzt werden,
wobei A ein Alkalimetall ist und M ein Metall ist, das aus der Gruppe ausgewählt wird, die aus Zinn, Zink, Chrom, Eisen, Cadmium, Blei und Kupfer besteht.

13. Verfahren nach Anspruch 12, **dadurch gekennzeichnet, dass** das galvanische Element alternativ oder zusätzlich unter Aufnahme elektrischer Energie aus einer an die Elektroden angeschlossenen Energiequelle aufgeladen wird, indem zur Umwandlung elektrischer Energie in chemische Energie
a) an der positiven Elektrode:
2 [M(OH)₃]⁻ - 2 e + 2 AOH + A₂[Mn(OH)₄] → 2A[M(OH₃)] + A₂[MnO₃] + 3 H₂O
und
b) an der negativen Elektrode:
2 A⁺ + 2 e + A[M(OH)₃] → 3 AOH + M
umgesetzt werden.

14. Verfahren nach Anspruch 12 oder 13, **dadurch gekennzeichnet, dass** als Alkalimetall-Hydroxid Kaliumhydroxid verwendet wird.

15. Verfahren nach einem der Ansprüche 12 bis 14, **dadurch gekennzeichnet, dass** als Metall (M) Zinn verwendet wird.

16. Verfahren nach einem der Ansprüche 12 bis 15, **dadurch gekennzeichnet, dass** beim Betreiben der Energiekonverterzelle die Wärmeenergiezufuhr an die elektrische Last oder die elektrische Last an die Wärmeenergiezufuhr angepasst wird.

## Claims

1. An energy converter cell, consisting of a negative electrode made of a metal chosen from the group consisting of tin, zinc, chromium, iron, cadmium, lead and copper (M), a positive electrode made of graphite and an electrolyte arranged between the electrodes and in contact with these, which electrolyte includes in the charged state manganate(IV) salt and alkali metal (A) hydroxide dissolved in water and forms a galvanic element, which can be discharged while delivering electrical energy to an ohmic consumer resistor connected to the electrodes and can be charged by supplying thermal energy, wherein the discharging and charging are described by the following reactions:
Discharging:
a) electrochemical reaction at the positive electrode:
2A⁺ + 2e → 2 A
2 A + 2 H₂O → 2 AOH + 2 H
b) electrochemical reaction at the negative electrode:
[MnO₃]²⁻ - 2 e + 2 AOH + M → M(OH)₂ + A₂[MnO₃]
Charging:
c) recycling reaction at the positive electrode:
A₂[MnO₃] + H₂O + 2 H → A₂[Mn(OH)₄]
d) recycling reaction at the negative electrode:
M(OH)₂ + AOH → A[M(OH)₃]
A₂[Mn(OH)₄] + A[M(OH)₃] + heat → A₂[MnO₃] + AOH + 3 H₂O + M
wherein A is an alkali metal and M is a metal chosen from the group consisting of tin, zinc, chromium, iron, cadmium, lead and copper.

2. The energy converter cell according to claim 1, **characterised in that** the galvanic element can be charged alternatively or in addition while receiving electrical energy from an energy source connected to the electrodes, wherein the charging is described by the following reactions:
Charging:
a) electrochemical reaction at the positive electrode:
2 [M(OH)₃]⁻ - 2 e + 2 AOH + A₂[Mn(OH)₄] → 2 A[M(OH)₃] + A₂[MnO₃] + 3H₂O
b) electrochemical reaction at the negative electrode:
2 A⁺ + 2 e + A[M(OH)₃] → 3 AOH + M

3. The energy converter cell according to claim 1 or 2, **characterised in that** the alkali metal (A) is potassium.

4. The energy converter cell according to one of claims 1 to 3, **characterised in that** the metal (M) is tin.

5. The energy converter cell according to one of claims 1 to 4, **characterised in that** the manganate(IV) salt has a depolarizing effect at the positive electrode.

6. The energy converter cell according to one of claims 1 to 5, **characterised in that** the positive electrode is a graphite film, and/or is porous such that it has as large a surface area as possible.

7. The energy converter cell according to one of claims 1 to 6, **characterised in that** at the side of the positive electrode facing the electrolyte there is arranged a layer made of a porous, electrically non-conducting carrier material suitable for receiving the electrolyte, and wherein a porous iron oxide layer (Fe₃O₄) is formed between this layer and the negative electrode, which layer also contains electrolyte and is in electrical contact with the negative electrode.

8. The energy converter cell according to claim 7, **characterised in that** between the layer made of carrier material and the negative electrode, instead of the porous iron oxide layer (Fe₃O₄), there exists a porous and electrically conducting mixture of iron oxide (Fe₃O₄) and tin (Sn), which also contains electrolyte.

9. The energy converter cell according to claim 8, **characterised in that** the mixture, instead of or in addition to tin (Sn), includes at least one other metal which acts in the same way, in particular zinc (Zn) or chromium (Cr).

10. The energy converter cell according to one of claims 7 to 9, **characterised in that** the carrier material consists of cotton fibres or the like and/or the layer made of carrier material is formed so as to be thin.

11. The energy converter cell according to one of claims 1 to 10, **characterised in that** the energy converter cell has means, in particular a control circuit, to adapt the thermal energy supply to the electrical load or the electrical load to the thermal energy supply.

12. A method of changing chemical energy into electrical energy and thermal energy into chemical energy by means of an energy converter cell, consisting of a negative electrode made of a metal chosen from the group consisting of tin, zinc, chromium, iron, cadmium, lead and copper (M), a positive electrode made of graphite and an electrolyte arranged between the electrodes and in contact with these, which electrolyte includes in the charged state manganate(IV) salt and alkali metal (A) hydroxide dissolved in water and forms a galvanic element by, in order to change chemical energy into electrical energy, the following being transformed,
a) at the positive electrode:
2A⁺ + 2e → 2A
2 A + 2 H₂O → 2 AOH + 2 H and
b) at the negative electrode:
[MnO₃]2⁻ - 2 e + 2 AOH + M → M(OH)₂ + A₂[MnO₃]
and
by, in order to change thermal energy into chemical energy, the following being transformed
c) at the positive electrode:
A₂[MnO₃] + H₂O + 2 H → A₂[Mn(OH)₄] and
d) at the negative electrode:
M(OH)₂ + AOH → A[M(OH)₃]
A₂[Mn(OH)₄] + A[M(OH)₃] + heart → A₂[MnO₃] + AOH + 3 H₂O + M
wherein A is an alkali metal and M is a metal chosen from the group consisting of tin, zinc, chromium, iron, cadmium, lead and copper.

13. The method according to claim 12, **characterised in that** the galvanic element is charged alternatively or additionally while receiving electrical energy from an energy source connected to the electrodes, by, in order to change electrical energy into chemical energy,
a) at the positive electrode:
2 [M(OH)₃]⁻ - 2 e + 2 AOH + A₂[Mn(OH)₄] → 2A[M(OH₃)] + A₂[MnO₃] + 3H₂O
and
b) at the negative electrode:
2A⁺ + 2 e + A[M(OH)₃] → 3 AOH + M being transformed.

14. The method according to claim 12 or 13, **characterised in that** potassium hydroxide is used as the alkali metal hydroxide.

15. The method according to one of claims 12 to 14, **characterised in that** tin is used as metal (M).

16. The method according to one of claims 12 to 15, **characterised in that** during operation of the energy converter cell the thermal energy supply is adapted to the electrical load or the electrical load is adapted to the thermal energy supply.

## Revendications

1. Cellule de conversion d'énergie, composée d'une électrode négative en un métal choisi parmi le groupe constitué d'étain, de zinc, de chrome, de fer, de cadmium, de plomb et de cuivre (M), d'une électrode positive en graphite et d'un électrolyte disposé entre les électrodes et se trouvant en contact avec celles-ci, électrolyte, qui, en état chargé, comprend du sel de manganate (IV) dissous dans l'eau et de l'hydroxyde de métal alcalin (A) et forme un élément galvanique pouvant être déchargé par émission d'énergie électrique sur une résistance de perte ohmique connectée aux électrodes et chargé par apport d'énergie thermique, le déchargement et le chargement étant décrits par les réactions suivantes :
Déchargement :
a) réaction électrochimique à l'électrode positive :
2 A+ + 2 e → 2A
2 A + 2 H₂O → 2 AOH + 2 H
b) réaction électrochimique à l'électrode négative :
[MnO₃]²⁻ - 2 e + 2 AOH + M → M(OH)₂ + A₂[MnO₃]
Chargement :
c) réaction de retour à l'électrode positive :
A₂[MnO₃] + H₂O + 2 H → A₂[Mn(OH)₄]
d) réaction de retour à l'électrode négative :
M(OH)₂ + AOH → A[M(OH)₃]
A₂[Mn(OH)₄] + A[M(OH)₃] + chaleur → A₂[MnO₃] + AOH + 3 H₂O + M
A étant un métal alcalin et M un métal choisi parmi le groupe constitué d'étain, de zinc, de chrome, de fer, de cadmium, de plomb et de cuivre.

2. Cellule de conversion d'énergie suivant la revendication 1, **caractérisée en ce que** l'élément galvanique peut être chargé alternativement ou additionnellement par absorption d'énergie électrique provenant d'une source d'énergie connectée aux électrodes, le chargement étant décrit par les réactions suivantes :
Chargement :
a) réaction électrochimique à l'électrode positive :
2 [M(OH)₃]⁻ - 2 e + 2 AOH + A₂[Mn(OH)₄] → 2 A[M(OH)₃] + A₂[MnO₃] + 3 H₂O
b) réaction électrochimique à l'électrode négative :
2 A⁺ + 2 e + A[M(OH)₃] → 3 AOH + M

3. Cellule de conversion d'énergie suivant la revendication 1 ou 2, **caractérisée en ce que** le métal alcalin (A) est du potassium.

4. Cellule de conversion d'énergie suivant une des revendications 1 à 3, **caractérisée en ce que** le métal M est de l'étain.

5. Cellule de conversion d'énergie suivant une des revendications 1 à 5, **caractérisée en ce qu'**à l'électrode positive, le sel de manganate (IV) agit de façon dépolarisante.

6. Cellule de conversion d'énergie suivant une des revendications 1 à 5, **caractérisée en ce que** l'électrode positive est une feuille de graphite et/ou est tellement poreuse qu'elle présente la plus grande surface possible.

7. Cellule de conversion d'énergie suivant une des revendications 1 à 6, **caractérisée en ce qu'**une couche d'un substrat poreux, non électroconducteur et approprié à recevoir l'électrolyte est disposée sur la face tournée vers l'électrolyte de l'électrode positive et **en ce qu'**entre cette couche et l'électrode négative est formée une couche en oxyde de fer (Fe₃O₄) qui contient également de l'électrolyte et qui se trouve électriquement en contact avec l'électrode négative.

8. Cellule de conversion d'énergie suivant la revendication 7, **caractérisée en ce qu'**au lieu de la couche d'oxyde de fer (Fe₃O₄), un mélange poreux et électroconducteur d'oxyde de fer (Fe₃O₄) et d'étain (Sn) contenant également de l'électrolyte se trouve entre la couche de substrat et l'électrode négative.

9. Cellule de conversion d'énergie suivant la revendication 8, **caractérisée en ce qu'**au lieu ou en plus de l'étain (Sn), le mélange comprend au moins un autre métal de même effet, en particulier du zinc (Zn) ou du chrome (Cr).

10. Cellule de conversion d'énergie suivant une des revendications 7 à 9, **caractérisée en ce que** le substrat est en fibres de coton ou similaire et/ou que la couche de substrat est conçue mince.

11. Cellule de conversion d'énergie suivant une des revendications 1 à 10, **caractérisée en ce qu'**elle présente des moyens, notamment un circuit régulateur afin d'adapter l'apport d'énergie thermique à la charge électrique ou la charge électrique à l'apport d'énergie thermique.

12. Procédé de conversion d'énergie chimique en énergie électrique et d'énergie thermique en énergie chimique avec une cellule de conversion d'énergie composée d'une électrode négative en un métal choisi parmi le groupe constitué d'étain, de zinc, de chrome, de fer, de cadmium, de plomb et de cuivre (M), d'une électrode positive en graphite et d'un électrolyte disposé entre les électrodes et se trouvant en contact avec celles-ci, électrolyte qui, en état chargé, comprend du sel de manganate (IV) dissous dans l'eau et de l'hydroxyde de métal alcalin (A) et forme un élément galvanique, en transposant,
pour la transformation d'énergie chimique en énergie électrique
a) à l'électrode positive :
2A⁺ + 2e → 2 A
2A + 2 H₂O → 2 AOH + 2H et
et
b) à l'électrode négative :
[MnO₃]²⁻ - 2e + 2 AOH + M → M(OH)₂ + A₂[MnO₃]
et pour convertir de l'énergie thermique en énergie chimique
c) à l'électrode positive :
A₂[MnO₃] + H₂O + 2 H → A₂[Mn(OH)₄] et
d) à l'électrode négative :
M(OH)₂ + AOH → A[M(OH)₃]
A₂[Mn(OH)₄] + A[M(OH)₃] + chaleur → A₂[MnO₃] + AOH + 3 H₂O + M
A étant un métal alcalin et M un métal choisi parmi le groupe constitué d'étain, de zinc, de chrome, de fer, de cadmium, de plomb et de cuivre.

13. Procédé suivant la revendication 12, **caractérisé en ce que** l'élément galvanique est chargé alternativement ou en plus par absorption d'énergie électrique provenant d'une source d'énergie connectée aux électrodes, en transposant, pour la conversion d'énergie électrique en énergie chimique
a) à l'électrode positive :
2[M(OH)₃]⁻ -2e + 2 AOH + A₂[Mn(OH)₄] → 2A[M(OH₃)] + A₂[MnO₃] + 3 H₂O
et
b) à l'électrode négative :
2 A⁺ + 2e + A[M(OH)3] → 3 AOH + M

14. Procédé suivant la revendication 12 ou 13, **caractérisé en ce que** de l'hydroxyde de potassium est utilisé comme hydroxyde de métal alcalin.

15. Procédé suivant une des revendications 12 à 14, **caractérisé en ce que** de l'étain est utilisé comme métal (M).

16. Procédé suivant une des revendications 12 à 15, **caractérisé en ce qu'**en service de la cellule de conversion d'énergie, l'apport d'énergie thermique est adapté à la charge électrique ou la charge électrique à l'apport d'énergie thermique.
